(19) Europäisches Patentamt / European Patent Office / Office européen des brevets

(11) **EP 4 098 626 A1**

(12) **EUROPEAN PATENT APPLICATION**

(43) Date of publication:
**07.12.2022 Bulletin 2022/49**

(51) International Patent Classification (IPC):
***C01G 53/00*** (2006.01)    ***H01M 4/00*** (2006.01)

(21) Application number: **22176852.6**

(22) Date of filing: **01.06.2022**

(52) Cooperative Patent Classification (CPC):
**C01G 53/50; H01M 4/00;** C01P 2002/72;
C01P 2004/03; C01P 2004/61; C01P 2006/40

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.06.2021 KR 20210071476**

(71) Applicant: **Samsung SDI Co., Ltd.**
**Yongin-si, Gyeonggi-do 17084 (KR)**

(72) Inventors:
• **KIM, Soohyeon**
  **17084 Yongin-si (KR)**
• **KIM, Sungsoo**
  **17084 Yongin-si (KR)**
• **LEE, Jangwook**
  **17084 Yongin-si (KR)**
• **CHOI, Seungyeon**
  **17084 Yongin-si (KR)**

(74) Representative: **Marks & Clerk LLP**
  **15 Fetter Lane**
  **London EC4A 1BW (GB)**

(54) **COMPOSITE CATHODE ACTIVE MATERIAL, METHOD OF PREPARING THE SAME, CATHODE INCLUDING THE SAME, AND LITHIUM SECONDARY BATTERY INCLUDING CATHODE**

(57)    A composite cathode active material, a method of preparing the composite cathode active material, and a lithium secondary battery including a cathode including the composite cathode active material are provided. The composite cathode active material includes: a nickel-based active material including about 60 mol% or more of nickel; and a coating layer on a surface of the nickel-based active material, the coating layer including a lanthanide composite. The composite cathode active material includes or is in the form of single crystal particles having an average particle diameter in a range of about 2 μm to about 8 μm, an aggregate of primary particles having an average particle diameter in a range of about 2 μm to about 8 μm, or a combination thereof.

FIG. 4

SDI 5.0kV 8.3mm x5.00k SE(M)                    10.0μm

**EP 4 098 626 A1**

**Description**

**BACKGROUND**

**1. Field**

One or more aspects of embodiments of the present disclosure relate to a composite cathode active material, a method of preparing the composite cathode active material, a cathode including the composite cathode active material, and a lithium secondary battery including the cathode.

**2. Description of the Related Art**

As portable electronic devices and communication devices develop, there is a need (e.g., great or substantial need) for the development of a lithium secondary battery having high energy density. However, lithium secondary batteries having high energy density may have reduced safety, and thus improvement in this regard is desired or needed.
A lithium nickel manganese cobalt composite oxide and/or a lithium cobalt oxide may be utilized as a cathode active material of a lithium secondary battery.
In order to prepare a lithium secondary battery having improved lifespan characteristics, a method of utilizing a cathode including a monocrystalline cathode active material has been suggested.
However, in the process of preparing a monocrystalline cathode active material of the related art, aggregation of particles, reduction of productivity, an increase in residual lithium, and/or a decrease in capacity, lifespan, and/or rate capability may occur, and thus improvement in this regard is desired.

**SUMMARY**

One or more aspects of embodiments of the present disclosure are directed toward a novel composite cathode active material.
One or more aspects of embodiments of the present disclosure are directed toward a method of preparing the composite cathode active material.
One or more aspects of embodiments of the present disclosure are directed toward a cathode including the composite cathode active material.
One or more aspects of embodiments of the present disclosure are directed toward a lithium secondary battery including the cathode.
Additional aspects will be set forth in part in the description that follows and, in part, will be apparent from the description, or may be learned by practice of the presented embodiments of the disclosure.
One or more embodiments of the present disclosure provide a composite cathode active material including a nickel-based active material including about 60 mol% or more or nickel; and a coating layer on a surface of the nickel-based active material, the coating layer including a lanthanide composite,
wherein the composite cathode active material includes (e.g., is in the form of) single crystal particles having an average particle diameter in a range of about 2 $\mu$m to about 8 $\mu$m, an aggregate of primary particles having an average particle diameter in a range of about 2 $\mu$m to about 8 $\mu$m, or a combination thereof, and
wherein an amount of the lanthanide composite is about 0.001 parts by weight or more and less than about 0.01 parts by weight based on 100 parts by weight of the nickel-based active material including about 60 mol% or more of nickel.
One or more embodiments of the present disclosure provide a method of preparing a composite cathode active material, the method including: a first step (e.g., act or task) of mixing a first lithium precursor and a nickel-based active material precursor for a lithium secondary battery, the nickel-based active material precursor including about 60 mol% or more of nickel, to obtain a first mixture, wherein a mixing molar ratio (Li/Me) of lithium to metal in the first mixture is in a range of about 0.2 to about 0.4;

a second step of performing a first heat-treatment on the first mixture in an oxidizing gas atmosphere to obtain a nickel-based lithium metal oxide;
a third step of obtaining a second mixture including the nickel-based lithium metal oxide and a second lithium precursor, wherein a mixing molar ratio (Li/Me) of lithium to metal in the second mixture is in a range of about 0.8 to about 1.2;
a fourth step of performing a second heat-treatment on the second mixture in an oxidizing gas atmosphere to obtain a lithium-containing nickel-based active material including about 60 mol% or more of nickel (based on 100 mol% of total metal elements excluding lithium of the nickel-based active material);

a fifth step of mechanically milling a mixture including a lanthanide precursor and the lithium-containing nickel-based active material including about 60 mol% or more of nickel to obtain a milled product; and

a sixth step of performing a third heat-treatment on a product of the milling at a temperature in a range of higher than about 600 °C to lower than about 1000 °C to prepare the composite cathode active material, wherein an amount of the lanthanide precursor is about 0.001 parts by weight or more and less than about 0.01 parts by weight based on 100 parts by weight of the lithium-containing nickel-based active material including about 60 mol% or more of nickel.

The first heat-treatment may be performed at a temperature in a range of about 600 °C to about 1200 °C, and the second heat-treatment may be performed at a temperature in a range of about 700 °C to about 900 °C. Also, the third heat-treatment may be performed at a temperature in a range of about 650 °C to about 900 °C in an oxidizing gas atmosphere.

One or more embodiments of the present disclosure provide a method of preparing a composite cathode active material, the method including: a first step of mixing a first lithium precursor and a nickel-based active material precursor for a lithium secondary battery, the nickel-based active material precursor including about 60 mol% or more of nickel, to obtain a first mixture, wherein a mixing molar ratio (Li/Me) of lithium to metal in the first mixture is in a range of about 0.2 to about 0.4;

a second step of performing a first heat-treatment on the first mixture in an oxidizing gas atmosphere to obtain a nickel-based lithium metal oxide;

a third step of obtaining a second mixture including the nickel-based lithium metal oxide, a second lithium precursor, and a lanthanide precursor, wherein a mixing molar ratio (Li/Me) of lithium to metal in the second mixture is in a range of about 0.8 to about 1.2;

a fourth step of performing a second heat-treatment on the second mixture in an oxidizing gas atmosphere; and

a fifth step of mechanically milling a product of the fourth step (e.g., the heat-treated second mixture) to prepare the composite cathode active material,

wherein an amount of the lanthanide precursor is about 0.001 parts by weight or more and less than about 0.01 parts by weight based on 100 parts by weight of the nickel-based active material (e.g. the nickel-based lithium metal oxide).

One or more embodiments of the present disclosure provide a cathode including the composite cathode active material.

One or more embodiments of the present disclosure provide a lithium secondary battery including the cathode, an anode, and an electrolyte between the cathode and the anode.

At least some of the above and other features of the invention are set out in the claims.

**BRIEF DESCRIPTION OF THE DRAWINGS**

The above and other aspects, features, and advantages of selected embodiments of the disclosure will be more apparent from the following description taken in conjunction with the accompanying drawings, in which:

FIG. 1 shows a scanning electron microscope (SEM) analysis image of a nickel-based active material prepared in Reference Example 1;

FIG. 2 is an X-ray diffraction analysis plot of a composite cathode active material prepared in Example 1, Preparation Example 1, and Comparative Example 4;

FIG. 3 is a schematic view of a lithium secondary battery according to an embodiment;

FIG. 4 shows results of SEM analysis of the composite cathode active material of Example 1;

FIG. 5 shows results of SEM analysis of a nickel-based active material prepared in Comparative Example 3; and

FIG. 6 is a graph that shows lifespan characteristics of lithium secondary batteries prepared in Manufacture Examples 1, 2, 3, and 5 and Comparative Manufacture Examples 1, 2, and 3.

**DETAILED DESCRIPTION**

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described below, by referring to the drawings, to explain aspects of the present description. As used herein, the term "and/or" includes any and all combinations of one or more of the associated listed items. Expressions such as "at least one of," "one of," and "selected from," when preceding a list of elements, modify the entire list of elements and do not modify the individual elements of the list. For example, the expressions "at least one of a, b and c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

It will be understood that, although the terms first, second, etc. may be used herein to describe various elements, these elements should not be limited by these terms. These terms are only used to distinguish one element, step, etc. from another element, step, etc. Thus, a first element, step, etc. could be termed a second element, step, etc. without departing from the teachings of the present invention. Similarly, a second element could be termed a first element.

As used herein, singular forms such as "a," "an," and "the" are intended to include the plural forms as well, unless the context clearly indicates otherwise. It will be further understood that the terms "includes," "including," "comprises," and/or "comprising," when used in this specification, specify the presence of stated features, steps, operations, elements, and/or components, but do not preclude the presence or addition of one or more other features, steps, operations, elements, components, and/or groups thereof. As used herein, the terms "use," "using," and "used" may be considered synonymous with the terms "utilize," "utilizing," and "utilized," respectively.

The term "may" will be understood to refer to "one or more embodiments," some of which include the described element and some of which exclude that element and/or include an alternate element. Similarly, alternative language such as "or" refers to "one or more embodiments," each including a corresponding listed item.

Hereinafter, according to one or more embodiments, a composite cathode active material, a method of preparing the same, a cathode including the same, and a lithium battery including the cathode will be described in more detail.

A single crystal nickel-based active material including about 60 mol% or more of nickel based on 100 mol% of the total metal elements excluding lithium may have excellent or suitable capacity characteristics, but lithium may not be diffused (e.g., lithium diffusion may be limited or impaired) during charging and discharging, resulting in unsatisfactory rate capability and/or lifetime characteristics, which need improvement.

In this regard, the present disclosure is directed toward a composite cathode active material including a coating layer including a lanthanide composite on a surface of a nickel-based active material to resolve these problems.

In the composite cathode active material including a coating layer, aggregation of particles of the composite cathode active material may be suppressed or reduced because the coating layer includes a lanthanide composite, and thus processability of the composite cathode active material may be improved, and a side reaction(s) with an electrolyte solution may be suppressed or reduced. Therefore, the composite cathode active material including the coating layer may have improved safety and/or lifetime characteristics as compared with a non-coated nickel-based active material.

The composite cathode active material according to an embodiment has a structure in which lanthanide is not in a doped form (e.g., is not doped into the bulk of the active material), but is instead present in (e.g., only in) a surface coating layer. When a composite cathode active material has this structure, thermal stability may be improved, and thus a lithium secondary battery having improved rate capability and lifetime characteristics may be manufactured.

The composite cathode active material according to an embodiment is in a state (e.g., has the physical form) of single crystal particles (or monocrystalline particles) including a nickel-based active material including about 60 mol% or more of nickel based on 100 mol% of the total metal elements excluding lithium and a coating layer including a lanthanide on a surface of the nickel-based active material.

The composite cathode active material, which is in the form of single crystal (monocrystalline) or one-body particles, may have an average particle diameter in a range of about 2 $\mu$m to about 8 $\mu$m, for example, about 2 $\mu$m to about 6 $\mu$m; an aggregate of primary particles having an average particle diameter in a range of about 2 $\mu$m to about 8 $\mu$m; or a combination thereof. The average particle diameter of the single crystal particles (monocrystalline particles) may be measured by utilizing a scanning electron microscope or a laser diffraction particle size distribution analyzer.

The average particle diameter may be, for example, an arithmetic mean of particle diameters measured automatically by software or manually from a scanning electron microscope image or a laser diffraction particle size distribution analyser.

When the average particle diameter of the composite cathode active material is less than about 2 $\mu$m, the cathode active material and the coating layer may not be separated (e.g., may not form distinct layers), and thus a coating layer including a lanthanide composite may not be formed. Also, when the average particle diameter of the composite cathode active material is greater than about 8 $\mu$m, the effect of adding a lanthanide composite may be insignificant.

An amount of the lanthanide composite is about 0.001 parts by weight or more and less than about 0.01 parts by weight, for example, about 0.001 parts to about 0.009 parts by weight, about 0.001 parts to about 0.007 parts by weight, or about 0.001 parts to about 0.005 parts by weight, based on 100 parts by weight of the nickel-based active material including about 60 mol% or more of nickel based on 100 mol% of the total metal elements excluding lithium. When an amount of the lanthanide composite is about 0.01 parts by weight or more, efficiency of the cathode active material may be decreased, and when an amount of the lanthanide composite is less than about 0.001 parts by weight, uniform distribution may be difficult, and a substantially uniform coating layer may not be formed. When the amount of the lanthanide composite is within these ranges, rate capability and lifespan characteristics of a lithium secondary battery utilizing the composite cathode active material may be improved.

The composite cathode active material including or being composed of single crystal particles (monocrystalline particles) may be confirmed utilizing any suitable method, for example, a high-resolution transmission electron microscope (HRTEM).

As used herein, the term "single crystal particles (monocrystalline particles)" may refer to or include one-body particles, secondary particles formed of aggregated primary particles, or a combination thereof. As used here, the term "one-body particle" refers to a structure in which the morphology of particles is not agglomerated to each other, but are separated and/or dispersed from each other in independent phases. In contrast to the one-body particle, a structure of a relatively large particle (a secondary particle) may be formed by physically or chemically agglomerating smaller particles (primary particles), where the primary particles are single crystal (monocrystalline) and relatively low in number (e.g., between 2 to 20, 2 to 10, or 2 to 5).

The composite cathode active material according to an embodiment includes or is in the form of single crystal (monocrystalline) particles, and thus a moving pathway of lithium ions reaching a surface of the nickel-based active material (e.g., a lithium ion diffusion path length) may be shortened. Accordingly, the number of lithium ions that are moved to the surface of the nickel-based active material and react with moisture and/or carbon dioxide in the air to produce lithium carbonate and/or lithium hydroxide surface impurities on a surface of the composite cathode active material may be reduced. Also, because the composite cathode active material according to an embodiment has a single crystal particle (monocrystalline particle) structure, a stable crystal structure may be maintained even during charging/discharging, and thus there is reduced concern about a sudden decrease in capacity due to a change (e.g., collapse) in the crystal structure.

A lanthanide (e.g., lanthanide element) in the lanthanide composite may be, for example, lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), or a combination thereof.

The lanthanide composite according to an embodiment may be, for example, i) an oxide including La, Ce, Pr, Nd, Pm, Sm, Eu, Gd, Tb, Dy, Ho, Er, Tm, Yb, Lu, or a combination thereof, e.g., a cerium oxide, or ii) an oxide including lithium and La, Ce, Pr, Nd, Pm, Sm, Eu, Gd, Tb, Dy, Ho, Er, Tm, Yb, Lu, or a combination thereof. The lanthanide composite may be, for example, a composite oxide including Ce and lithium.

The lanthanide composite according to an embodiment may be, for example, a compound represented by Formula 1.

**Formula 1** $\quad$ $Li_xCe_yO_2$.

In Formula 1, $0 \leq x \leq 1.05$ and $0.95 \leq y \leq 1.05$.

The lanthanide composite may be, for example, $CeO_2$, $LiCeO_2$, or a combination thereof.

An amount of nickel in the nickel-based active material, which has an amount of nickel of about 60 mol% or more, may be in a range of about 60 mol% to about 95 mol% or about 70 mol% to about 94 mol%. When the nickel-based active material is utilized, a lithium secondary battery having high capacity characteristics may be manufactured.

The nickel-based active material having an amount of nickel of about 60 mol% or more may be, for example, a compound represented by Formula 2.

**Formula 2** $\quad$ $Li_a(Ni_{1-x-y-z}Co_xMn_yM_zO_{2\pm\alpha 1}$

.

In Formula 2, M is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), aluminium (Al), and cerium (Ce), and

$0.9 \leq a \leq 1.1$, $0.6 \leq (1-x-y-z) < 1$, $0 < x < 0.4$, $0 \leq y < 0.4$, $0 \leq z < 0.4$, and $0 \leq \alpha 1 \leq 0.1$.

In Formula 2, the sum of mole fractions of Ni, Co, Mn, and M is 1.

The coating layer including the lanthanide composite may be in the form of discontinuous islands. When the coating layer is in the form of discontinuous islands, aggregation of the composite cathode active material may be suppressed or reduced and manufacturing processability may be improved, compared with an active material having a substantially continuous coating layer.

The composite cathode active material according to an embodiment is in a monocrystalline state and includes a lanthanide composite. In an X-ray diffraction analysis of the composite cathode active material, peaks appear in regions in a 2θ range of about 30.5° to about 32.5° (e.g. about 30.50° to about 32.49°) and about 32.5° to about 34.5° (e.g. about 32.50° to about 34.50°), and thus it may be determined that the composite cathode active material has a structure that is not doped with a lanthanide material (for example, cerium oxide) but instead includes the lanthanide material (e.g., cerium oxide) in a separate coating layer.

In contrast, a composite cathode active material doped with cerium oxide has an X-ray diffraction peak corresponding to a composite including lithium and cerium (e.g., within the same crystal lattice) in a diffraction angle $2\theta$ range of about 23.5° to about 25.5°, for example, about 24.7°.

A thickness of the coating layer may be in a range of about 10 nm to about 1 $\mu$m (1000 nm), about 50 nm to about 800 nm, about 100 nm to about 500 nm, or about 150 nm to about 300 nm. When the thickness of the coating layer is within these ranges, charge/discharge efficiency and/or lifespan characteristics of a lithium secondary battery including the composite cathode active material may improve.

The nickel-based active material according to an embodiment may be prepared by obtaining a mixture (e.g., a second mixture) of a nickel-based metal oxide (e.g. a nickel-based lithium metal oxide) and a lithium precursor (e.g., second lithium precursor); and performing a second heat-treatment on the second mixture in an oxidizing gas atmosphere at a temperature of about 700 °C to about 900 °C to obtain a nickel-based active material (e.g. a lithium-containing nickel-based active material).

The nickel-based metal oxide as a starting material for forming a nickel-based active material may be a product prepared by mixing a lithium precursor and a nickel-based active material precursor for a lithium secondary battery, the nickel-based active material precursor including 60 mol% or more of nickel, to obtain a first mixture; and performing a first heat-treatment on the first mixture in an oxidizing gas atmosphere at a temperature in a range of about 600 °C to about 1200 °C to obtain a nickel-based metal oxide (e.g. a nickel-based lithium metal oxide) for a lithium secondary battery.

Hereinafter, a method of preparing the composite cathode active material according to an embodiment will be described.

The method of preparing the composite cathode active material may be one of the two methods described herein. According to the first method of preparing the composite cathode active material, a lanthanide (e.g., cerium) precursor is added before performing a third heat-treatment, and in the second method of preparing the composite cathode active material, a lanthanide (e.g., cerium) precursor is added during the second heat-treatment without the third heat-treatment. In this regard, a step of adding a lanthanide (e.g., cerium) precursor and heat-treatment conditions are different between the first method and the second method.

The first method of preparing the composite cathode active material includes a first step (e.g., act or task) of mixing a first lithium precursor and a nickel-based active material precursor for a lithium secondary battery to obtain a first mixture, the nickel-based active material precursor including 60 mol% or more of nickel, wherein a mixing molar ratio (Li/Me) of lithium to metal in the first mixture is in a range of about 0.2 to about 0.4; a second step of performing a first heat-treatment on the first mixture in an oxidizing gas atmosphere to obtain a nickel-based lithium metal oxide; a third step of obtaining (e.g., preparing) a second mixture including the nickel-based lithium metal oxide and a second lithium precursor, wherein a mixing molar ratio (Li/Me) of lithium to metal in the second mixture is in a range of about 0.8 to about 1.2; a fourth step of performing a second heat-treatment on the second mixture in an oxidizing gas atmosphere to obtain a lithium-containing nickel-based active material including 60 mol% or more of nickel; a fifth step of mechanically milling a mixture including a lanthanide precursor and the lithium-containing nickel-based active material including 60 mol% or more of nickel; and a sixth step of performing a third heat-treatment on a product of the milling at a temperature in a range of higher than about 600 °C to lower than about 1000 °C.

As used herein, in the term "a mixing molar ratio (Li/Me) of lithium to metal", the term "metal" refers to metals other than lithium.

For the mechanical milling in the fifth step, a ball mill or a HENSCHEL mixer® may be utilized. Also, the amounts of the nickel-based active material including 60 mol% or more of nickel and the lanthanide precursor may be stoichiometrically controlled or selected to prepare the desired or suitable composite cathode active material.

An amount of the lanthanide precursor may be about 0.001 parts by weight or more and less than about 0.01 parts by weight based on 100 parts by weight of the nickel-based active material (e.g. the lithium-containing nickel-based active material) including 60 mol% or more of nickel. When the amount of the lanthanide precursor is within this range, a composite cathode active material having improved rate capability, safety, and/or lifespan characteristics may be obtained.

The first heat-treatment may be performed at a temperature in a range of about 600 °C to about 1200 °C, and the second heat-treatment may be performed at a temperature in a range of about 700 °C to about 900 °C. When the first heat-treatment and the second heat-treatment are performed under these conditions, a composite cathode active material having improved rate capability, safety, and/or lifespan characteristics may be obtained.

The third heat-treatment may be performed at a temperature in a range of about 650 °C to about 900 °C, about 800 °C to about 900 °C, or about 850 °C to about 900 °C in an oxidizing gas atmosphere. The oxidizing gas atmosphere may be, for example, an air atmosphere and/or an oxygen atmosphere. The oxygen atmosphere may have an oxygen content (e.g., amount) of about 90 vol% or more, and the rest may be an inert gas. Here, the inert gas may be nitrogen, helium, argon, or a combination thereof.

The lanthanide precursor may be a compound including a lanthanide element, and examples of the compound including lanthanide may include a nitrate, an oxide, a sulfate, and/or a chloride including at least one element selected from La, Ce, Pr, Nd, Pm, Sm, Eu, Gd, Tb, Dy, Ho, Er, Tm, Yb, and Lu. The lanthanide precursor may be, for example, cerium oxide, cerium nitrate, and/or cerium sulfate.

The second method of preparing the composite cathode active material includes a first step of mixing a first lithium precursor and a nickel-based active material precursor for a lithium secondary battery to obtain a first mixture, the nickel-based active material precursor including about 60 mol% or more of nickel, wherein a mixing molar ratio (Li/Me) of lithium to metal in the first mixture is in a range of about 0.2 to about 0.4; a second step of performing a first heat-treatment on the first mixture in an oxidizing gas atmosphere to obtain a nickel-based lithium metal oxide; a third step of obtaining (e.g., preparing) a second mixture including the nickel-based lithium metal oxide, a second lithium precursor, and a lanthanide precursor, wherein a mixing molar ratio (Li/Me) of lithium to metal in the second mixture is in a range of about 0.8 to about 1.2; a fourth step of performing a second heat-treatment on the second mixture in an oxidizing gas atmosphere; and a fifth step of mechanically milling a product of the fourth step. Here, an amount of the lanthanide precursor may be about 0.001 parts by weight or more and less than about 0.01 parts by weight based on 100 parts by weight of the nickel-based lithium metal oxide.

The first heat-treatment may be performed at a temperature in a range of about 600 °C to about 1200 °C, and the second heat-treatment may be performed at a temperature in a range of about 700 °C to about 900 °C. When the first heat-treatment and the second heat-treatment are performed under these conditions, a composite cathode active material having improved rate capability, safety, and/or lifespan characteristics may be obtained.

The nickel-based active material according to an embodiment may be prepared from a nickel-based metal oxide that will be described below. As utilized herein, the nickel-based metal oxide may be referred to the Korean Patent Application No. 10-2021-009565, the entire content of which is incorporated by reference herein.

The nickel-based metal oxide and the nickel-based active material obtained therefrom will now be described in more detail.

The nickel-based metal oxide includes a cubic composite phase, wherein the cubic composite phase includes a metal oxide phase represented by Formula 3 and a metal oxide phase represented by Formula 4.

$$\text{Formula 3} \qquad Ni_{1-x-z-k}M_kLi_xCo_zO_{1-y}.$$

In Formula 3, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0 \le x \le 0.1$, $0 \le y \le 0.1$, $0 \le z \le 0.5$, and $0 \le k \le 0.5$.

$$\text{Formula 4} \qquad Ni_{6-x-z-k}M_kLi_xCo_zMnO_{8-y}.$$

In Formula 4, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0 \le x \le 0.1$, $0 \le y \le 0.1$, $0 \le z \le 0.5$, and $0 \le k \le 0.5$.

The cubic composite phase may include a rock-salt cubic phase and an ordered rock-salt cubic phase.

The metal oxide phase represented by Formula 3 may be a rock-salt cubic phase, and the metal oxide phase represented by Formula 4 may be an ordered rock-salt cubic phase.

In Formulae 3 and 4, x and y may each independently be 0 or in a range of about 0.01 to about 0.08, about 0.01 to about 0.07, about 0.01 to about 0.06, or about 0.01 to about 0.05. In Formulae 3 and 4, z may satisfy $0 \le z \le 0.3$, $0 \le z \le 0.2$, $0 \le z \le 0.1$, or z may be 0. In Formulae 3 and 4, k may be 0.

In the nickel-based metal oxide, a mixing molar ratio of the metal oxide phase represented by Formula 3 and the metal oxide phase represented by Formula 4 may be, for example, in a range of about 1:9 to about 9:1, about 3:7 to about 7:3, or about 5:5. Here, the presence and the mixing molar ratio of the metal oxide phase represented by Formula 3 and the metal oxide phase represented by Formula 4 may be confirmed by X-ray diffraction (XRD) analysis.

As used herein, the term "rock-salt cubic phase" refers to a crystal structure of which a space group is Fm-3m, and the term "ordered rock-salt cubic phase" refers to a crystal structure including a nickel layer and a manganese layer in an oxygen crystal lattice, of which a space group is Fm-3m.

The nickel-based metal oxide may include a metal oxide phase represented by Formula 3-1 and a metal oxide phase represented by Formula 4-1, and the nickel-based metal oxide is in the form of monocrystalline particles.

$$\text{Formula 3-1} \qquad Ni_{1-x}Li_xO_{1-y}.$$

In Formula 3-1, $0 \le x \le 0.1$ and $0 \le y \le 0.1$,

Formula 4-1          $Ni_{6-x}Li_xMnO_{8-y}$.

In Formula 4-1, $0 \leq x \leq 0.1$ and $0 \leq y \leq 0.1$.

In Formulae 3-1 and 4-1, x and y may each independently be 0. In Formulae 3-1 and 4-1, x, and y may each independently be a number greater than 0. In Formulae 3-1 and 4-1, x, and y may each independently be in a range of about 0.01 to about 0.08, about 0.01 to about 0.07, about 0.01 to about 0.06, or about 0.01 to about 0.05.

The metal oxide phase represented by Formula 3-1 and the metal oxide phase represented by Formula 4-1 may each independently be the same as the metal oxide phase represented by Formula 3 and the metal oxide phase represented by Formula 4, respectively, except that the metal oxide phase represented by Formula 3-1 and the metal oxide phase represented by Formula 4-1 do not include (e.g., exclude) cobalt. Here, the metal oxide phase represented by Formula 3-1 may be a rock-salt cubic phase, and the metal oxide phase represented by Formula 4-1 may be an ordered rock-salt cubic phase.

The nickel-based metal oxide having a cubic composite phase may be a first heat-treated product prepared by adding a partial (e.g., sub-stoichiometric) amount of lithium during a first heat-treatment on the mixture of the nickel-based metal oxide precursor (e.g. the nickel-based active material precursor) and the lithium precursor (e.g. the first lithium precursor). A single crystal nickel-based active material for a lithium secondary battery having a layered structure may be prepared by grain growth of the nickel-based metal oxide and then further adding lithium. The nickel-based active material for a lithium secondary battery is a single crystal (e.g., monocrystalline) active material that has one-body particle characteristics and is capable of suppressing aggregation of particles, improving productivity, and having a low amount of residual lithium without being washed. When the nickel-based active material for a lithium secondary battery is utilized, a lithium secondary battery having reduced gas generation and/or a long lifespan may be prepared.

In the XRD analysis of the nickel-based metal oxide for a lithium secondary battery according to an embodiment, a main peak appears when the diffraction angle $2\theta$ is in a range of about 42° to about 44°, and a minor peak appears when the diffraction angle $2\theta$ is in a range of about 18° to about 20°. Here, the term "main peak" refers to a peak that has the maximum intensity in the diffraction plot or the designated ranges, and the term "minor peak" refers to a peak having an intensity less (e.g., lower) than that of the main peak.

An intensity ratio ($I_A/I_B$) of the main peak (A) to the minor peak (B) may be in a range of about 7 to about 9.5 or about 7.14 to about 9.4. A full width at half maximum (FWHM) of the main peak may be in a range of about 0.13° to about 0.36°, and a FWHM of the minor peak may be in a range of about 0.09° to about 0.15°.

A size of the nickel-based metal oxide for a lithium secondary battery may be in a range of about 2 μm to about 8 μm or about 3 μm to about 8 μm.

As used herein, when particles are spherical, the term "size" refers to a particle diameter (e.g., average particle diameter). The average particle diameter (D50) may be confirmed by any suitable method, such as by utilizing a scanning electron microscope (SEM). The average particle diameter may be measured by introducing a laser diffraction particle size meter (e.g., Microtrac MT 3000), and after irradiating ultrasonic waves of approximately 28 kHz with an output of 60 W, the average particle diameter (D50) based on 50 % in the particle diameter distribution in the measuring instrument may be calculated.

When particles are non-spherical, the "size" refers to a long-axis length. For example, the particle diameter may be an average particle diameter, and the long-axis length may be an average long-axis length. The size of particles may be measured utilizing a size meter or an SEM.

A nickel-based metal oxide for a lithium secondary battery according to an embodiment and a method of preparing a composite cathode active material for a lithium secondary battery utilizing the nickel-based metal oxide will be described in further detail.

First, a first lithium precursor and a nickel-based active material precursor for a lithium secondary battery, the nickel-based active material including 60 mol% or more of nickel, are mixed to obtain a first mixture. The first mixture may be first heat-treated at a temperature in a range of about 600 °C to about 1200 °C, about 700 °C to about 1200 °C, about 960 °C to about 1100 °C, or, for example, at about 1000 °C to obtain a nickel-based metal oxide (e.g. a nickel-based lithium metal oxide) in an oxidizing gas atmosphere.

In the first mixture, a mixing molar ratio (Li/Me) of lithium to metal may be controlled or selected to be in a range of about 0.2 to about 0.4. When the mixing molar ratio (Li/Me) of lithium to metal is within this range, a nickel-based metal oxide (e.g. a nickel-based lithium metal oxide) for a lithium secondary battery having a cubic composite phase may be obtained.

The oxidizing gas atmosphere may be, for example, an air atmosphere or an oxygen atmosphere. The oxygen atmosphere may have an oxygen content (e.g., amount) of about 90 vol% or more, and the rest may be an inert gas. Here, the inert gas may be nitrogen, helium, argon, or a combination thereof.

The first lithium precursor may be, for example, lithium hydroxide, lithium fluoride, lithium carbonate, or a mixture thereof. A mixing ratio of the lithium precursor and the nickel-based active material precursor for a lithium secondary battery may be stoichiometrically controlled or selected to prepare the desired or suitable nickel-based active material for a lithium secondary battery.

The mixing may be dry mixing or may be performed by utilizing a mixer. The dry mixing may be performed by milling. Although conditions of the milling are not particularly limited, the milling may be performed in a way such that a precursor utilized as a starting material barely undergoes deformation (such as but not limited to pulverization). A size of the first lithium precursor to be mixed with the nickel-based active material precursor for a lithium secondary battery may be controlled or selected in advanced. The size (average particle diameter) of the first lithium precursor may be in a range of about 5 $\mu$m to about 15 $\mu$m or, for example, about 10 $\mu$m. When the first lithium precursor having such a size is milled with the nickel-based active material precursor at a rate of about 300 rpm to about 3,000 rpm, a desired or suitable mixture may be obtained. When the temperature in the mixer rises to about 30 °C or higher in the milling process, a cooling process may be performed to maintain the temperature in the mixer at room temperature (25 °C).

An amount of nickel in the nickel-based active material precursor for a lithium secondary battery may be, for example, in a range of about 60 mol% to about 85 mol%.

In preparation of the composite cathode active material for a lithium secondary battery, a second lithium precursor is added to the nickel-based metal oxide (e.g. the nickel-based lithium metal oxide) for a lithium secondary battery to obtain a second mixture. In the second mixture, a mixing molar ratio (Li/Me) of lithium to metal may be controlled or selected to be in a range of about 0.8 to about 1.2, and the second mixture may be second heat-treated in an oxidizing gas atmosphere at a temperature in a range of about 700 °C to about 900 °C, for example, about 800 °C to about 900 °C.

A size of the nickel-based active material for a lithium secondary battery (e.g. the lithium-containing nickel-based active material) is in a range of about 2 $\mu$m to about 8 $\mu$m.

The second lithium precursor may be identical to the first lithium precursor.

A molar ratio of Li/Me in the nickel-based active material obtained according to these processes may be in a range of about 0.9 to about 1.1 or, for example, about 1.05.

The nickel-based active material precursor for a lithium secondary battery may be a compound represented by Formula 5, a compound represented by Formula 6, or a combination thereof.

**Formula 5** $\quad$ $Ni_{1-x-y-z}Co_xMn_yM_z(OH)_2$.

**Formula 6** $\quad$ $Ni_{1-x-y-z}Co_xMn_yM_zO$.

In Formulae 5 and 6, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), aluminium (Al), and cerium (Ce), and $0.6 \leq (1-x-y-z) < 1$, $0 < x < 0.4$, $0 \leq y < 0.4$, and $0 \leq z < 0.4$.

In Formulae 5 and 6, the sum of mole fractions of nickel, cobalt, manganese, and M is 1.

According to an embodiment, in Formulae 5 and 6, x may be in a range of about 0.1 to about 0.3, y may be in a range of about 0.05 to about 0.3, and z may be about 0.

An amount of nickel in the nickel-based active material precursors of Formulae 5 and 6, may be in a range of about 60 mol% to about 95 mol% or, for example, about 70 mol% to about 94 mol%.

The nickel-based active material precursor may be, for example, $Ni_{0.92}Co_{0.05}Al_{0.03}(OH)_2$, $Ni_{0.94}Co_{0.03}Al_{0.03}(OH)_2$, $Ni_{0.88}Co_{0.06}Al_{0.06}(OH)_2$, $Ni_{0.96}Co_{0.02}Al_{0.02}(OH)_2$, $Ni_{0.93}Co_{0.04}Al_{0.03}(OH)_2$, $Ni_{0.8}Co_{0.15}Al_{0.05}(OH)_2$, $Ni_{0.75}Co_{0.20}Al_{0.05}(OH)_2$, $Ni_{0.75}Co_{0.1}Mn_{0.15}(OH)_2$, $Ni_{0.92}Co_{0.06}Mn_{0.03}(OH)_2$, $Ni_{0.94}Co_{0.03}Mn_{0.03}(OH)_2$, $Ni_{0.88}Co_{0.06}Mn_{0.06}(OH)_2$, $Ni_{0.96}Co_{0.02}Mn_{0.02}(OH)_2$, $Ni_{0.93}Co_{0.04}Mn_{0.03}(OH)_2$, $Ni_{0.8}Co_{0.15}Mn_{0.05}(OH)_2$, $Ni_{0.75}Co_{0.20}Mn_{0.05}(OH)_2$, $Ni_{0.6}Co_{0.2}Mn_{0.2}(OH)_2$, $Ni_{0.7}Co_{0.15}Mn_{0.15}(OH)_2$, $Ni_{0.7}Co_{0.1}Mn_{0.2}(OH)_2$, $Ni_{0.8}Co_{0.1}Mn_{0.1}(OH)_2$, or $Ni_{0.85}Co_{0.1}Al_{0.05}(OH)_2$.

The nickel-based active material precursor for a lithium secondary battery may be prepared by coprecipitation of a mixture including a metal raw material (such as a nickel precursor, a cobalt precursor, a manganese precursor, or a precursor of another metal), a complexing agent, and a pH adjuster.

In consideration of a composition of the nickel-based active material precursor, the metal raw material may be a metal precursor corresponding to the nickel-based active material precursor. The metal raw material may be, for example, a metal carbonate, a metal sulfate, a metal nitrate, or a metal chloride, but embodiments are not limited thereto, and any material available as a metal precursor in the art may be utilized.

The nickel precursor may be or include nickel sulfate, nickel chloride, and/or nickel nitrate. The cobalt precursor may be or include cobalt sulfate, cobalt chloride, and/or cobalt nitrate, and the manganese precursor may be or include manganese sulfate, manganese chloride, and/or manganese nitrate.

Amounts of the metal raw materials may be stoichiometrically controlled or selected to obtain the desired or suitable nickel-based active material precursor.

The pH adjuster may be utilized to decrease a solubility of a metal ion in a reactor to precipitate the metal ion as a hydroxide. The pH adjuster may be or include, for example, ammonium hydroxide, sodium hydroxide (NaOH), and/or sodium carbonate ($Na_2CO_3$). The pH adjuster may be, for example, sodium hydroxide (NaOH).

The complexing agent may be utilized to control a precipitation formation rate in a coprecipitation reaction. The complexing agent may be or include, for example, ammonium hydroxide ($NH_4OH$) (ammonia water), citric acid, acrylic acid, tartaric acid, and/or glycolic acid. Any suitable or general amount of the complexing agent may be utilized. The complexing agent may be, for example, ammonia water.

The product of the coprecipitation reaction is washed and then dried to obtain the desired or suitable nickel-based active material precursor for a lithium secondary battery. Any suitable or general drying conditions may be utilized.

A nickel-based active material for a lithium secondary battery according to another embodiment is obtained from the nickel-based active material precursor for a lithium secondary battery, and the nickel-based active material may be in a single crystal state.

The nickel-based active material may be a compound represented by Formula 2.

$$\text{Formula 2} \qquad Li_a(Ni_{1-x-y-z}Co_xMn_yM_z)O_{2\pm\alpha 1}.$$

In Formula 2, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), aluminium (Al), and cerium (Ce), and $0.9 \leq a \leq 1.1$, $0.6 \leq (1-x-y-z) < 1$, $0 < x < 0.4$, $0 \leq y < 0.4$, $0 \leq z < 0.4$, and $0 \leq \alpha 1 \leq 0.1$.

The nickel-based active material may be a single crystal particle or, for example, a secondary particle that is an agglomerate of primary particles. Here, a size of the primary particles may be in a range of about 1 $\mu$m to about 5 $\mu$m or about 1 $\mu$m to about 3 $\mu$m, and a size of the secondary particle may be in a range of about 2.5 $\mu$m to about 8 $\mu$m or about 2.5 $\mu$m to about 6 $\mu$m.

In the XRD analysis of the nickel-based active material, a full width at half maximum (FWHM) (003) of (003) plane peak is in a range of about 0.11° to about 0.14°, about 0.12° to about 0.14°, or about 0.1237° to about 0.1310°, and a FWHM (104) of (104) plane peak is in a range of about 0.55° to about 0.83°, about 0.6° to about 0.83°, or about 0.6211° to about 0.8280°.

When a X-ray diffraction test about the lithium nickel composite oxides is performed, the (003) plane peak is found around a diffraction angle ($2\theta$) of 18° to 20°, for example, 19°, and the (104) plane peak is found around a diffraction angle ($2\theta$) of 43° to 46°, for example, 45°.

In Formula 2, the sum of the mole fractions of Ni, Co, Mn, and M is 1. In Formula 2, an amount of nickel may be, for example, in a range of about 60 mol% to about 95 mol% or about 60 mol% to about 85 mol% based on a total mole amount of all metals excluding lithium in the nickel-based active material.

In the nickel-based active material of Formula 2, the amount of nickel may be greater than each of the other metals based on 1 mole of the total amount of the metals (e.g. all metals excluding lithium). When the nickel-based active material having such a high Ni content (e.g., amount) is utilized, the degree of lithium diffusion increases, conductivity increases, and higher capacity may be obtained at the same voltage in a lithium secondary battery including a cathode including the nickel-based active material.

In some embodiments, in Formula 2, $0 < x \leq 0.3$, $0 \leq y \leq 0.3$, and $0 \leq z \leq 0.05$. In Formula 2, for example, a may be in a range of about 1 to about 1.1, x may be in a range of about 0.1 to about 0.3, and y may be in a range of about 0.05 to about 0.3. In some embodiments, z in Formula 2 may be 0. In Formula 2, for example, a may be in a range of about 1 to about 1.1, x may be in a range of about 0.1 to about 0.3, y may be in a range of about 0.05 to about 0.3, and z may be 0.

The nickel-based active material may be, for example, $Li_{1.05}Ni_{0.92}Co_{0.05}Al_{0.03}O_2$, $Li_{1.05}Ni_{0.94}Co_{0.03}Al_{0.03}O_2$, $Li_{1.05}Ni_{0.88}Co_{0.06}Al_{0.06}O_2$, $Li_{1.05}Ni_{0.96}Co_{0.02}Al_{0.02}O_2$, $Li_{1.05}Ni_{0.93}Co_{0.04}Al_{0.03}O_2$, $Li_{1.05}Ni_{0.8}Co_{0.15}Al_{0.05}O_2$, $Li_{1.05}Ni_{0.75}Co_{0.20}Al_{0.05}O_2$, $LiNi_{0.75}Co_{0.1}Mn_{0.15}O_2$, $Li_{1.05}Ni_{0.92}Co_{0.05}Mn_{0.03}O_2$, $Li_{1.05}Ni_{0.94}Co_{0.03}Mn_{0.03}O_2$, $Li_{1.05}Ni_{0.88}Co_{0.06}Mn_{0.06}O_2$, $Li_{1.05}Ni_{0.96}Co_{0.02}Mn_{0.02}O_2$, $Li_{1.05}Ni_{0.93}Co_{0.04}Mn_{0.03}O_2$, $Li_{1.05}Ni_{0.8}Co_{0.15}Mn_{0.05}O_2$, $Li_{1.05}Ni_{0.75}Co_{0.20}Mn_{0.05}O_2$, $Li_{1.05}Ni_{0.6}Co_{0.2}Mn_{0.2}O_2$, $Li_{1.05}Ni_{0.7}Co_{0.15}Mn_{0.15}O_2$, $Li_{1.05}Ni_{0.7}Co_{0.1}Mn_{0.2}O_2$, $Li_{1.05}Ni_{0.8}Co_{0.1}Mn_{0.1}O_2$, or $Li_{1.05}Ni_{0.85}Co_{0.1}Al_{0.05}O_2$.

According to another embodiment, a lithium secondary battery includes a cathode including the composite cathode active material according to an embodiment, an anode, and an electrolyte between the cathode and the anode.

When a method of preparing a composite cathode active material according to an embodiment is utilized, a lithium secondary battery having high capacity and/or improved charge/discharge efficiency and/or lifespan may be prepared.

An amount of residual lithium in the nickel-based active material according to an embodiment may be less than about 900 ppm.

Hereinafter, a method of preparing a lithium secondary battery having a cathode including the composite cathode active material according to an embodiment, an anode, a non-aqueous electrolyte including a lithium salt, and a separator will be described.

The cathode and the anode may be prepared by applying and drying a composition for a cathode active material layer and a composition for an anode active material layer on a cathode current collector and an anode current collector to form a cathode active material layer and an anode active material layer, respectively.

The composition for a cathode active material layer may be prepared by mixing a cathode active material, a conducting agent, a binder, and a solvent, and the composite cathode active material according to an embodiment is utilized as the cathode active material.

The binder in the cathode active material layer may improve adhesive strength between cathode active material particles and between the cathode active material and the cathode current collector. Examples of the binder may include polyvinylidene fluoride (PVDF), polyvinylidene fluoride and hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM) rubber, sulfonated-EPDM rubber, styrene-butadiene rubber (SBR), fluorine rubber and/or various suitable copolymers thereof, and these may be utilized either alone (as one type or kind) or as a mixture of two or more types (kinds).

The conducting agent may be any material as long as it has electrical conductivity without causing a chemical change in the corresponding battery. Examples of the conducting agent may be or include graphite (such as natural graphite and/or artificial graphite); a carbonaceous material (such as carbon black, acetylene black, ketjen black, channel black, furnace black, lamp black, and/or thermal black); conductive fiber (such as carbon fiber and/or metal fiber); fluorocarbon; metal powder (such as aluminium powder and/or nickel powder); conductive whisker (such as zinc oxide and/or potassium titanate); conductive metal oxide (such as titanium oxide); and a conductive material (such as a polyphenylene derivative).

An amount of the conducting agent may be in a range of about 1 part to about 10 parts by weight or about 1 part to about 5 parts by weight based on 100 parts by weight of the cathode active material. When the amount of the conducting agent is within these ranges, conductivity characteristics of the final cathode thus obtained may be excellent or suitable.

A non-limiting example of the solvent may be N-methylpyrrolidone, and an amount of the solvent may be in a range of about 20 parts to about 200 parts by weight based on 100 parts by weight of the cathode active material. When the amount of the solvent is within this range, a process for forming the cathode active material layer may be easily carried out.

A thickness of the cathode current collector may be in a range of about 3 $\mu$m to about 500 $\mu$m. A material of the cathode current collector is not particularly limited as long as it has electrical conductivity without causing a chemical change in the corresponding battery. Examples of the material of the cathode current collector may be or include stainless steel, aluminium, nickel, titanium, calcined carbon, and/or aluminium and/or stainless steel that is surface treated with carbon, nickel, titanium, and/or silver. The cathode current collector may have fine irregularities on a surface thereof to enhance adhesive strength to the cathode active material. The cathode current collector may be in one or more suitable forms (such as a film, a sheet, a foil, a net, a porous structure, a foam structure, and/or a non-woven structure).

An anode active material, a binder, and a solvent may be mixed to prepare a composition for an anode active material layer.

The anode active material is a material capable of absorbing and desorbing lithium ions. Examples of the anode active material may be or include a carbonaceous material (such as graphite or carbon, a lithium metal, an alloy of a lithium metal, silicon carbon composite material, and a silicon oxide-based material). In some embodiments, the anode active material may be a silicon oxide.

Examples of the binder in the anode may be or include polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylate, an ethylene-propylene-diene monomer (EPDM), a sulfonated EPDM, a styrene-butadiene rubber (SBR), a fluorine rubber, poly(acrylic acid), polymers in which hydrogens thereof are substituted with lithium (Li), sodium (Na), and/or calcium (Ca), or one or more suitable copolymers of any of the above.

The anode active material layer may further include a conducting agent. The conducting agent may be any suitable material having electrical conductivity without causing an unwanted chemical change in the corresponding battery. Examples of the conducting agent may be or include graphite (such as natural graphite and/or artificial graphite); a carbonaceous material (such as carbon black, acetylene black, ketjen black, channel black, furnace black, lamp black, and/or thermal black); a conductive fiber (such as carbon fiber and/or metal fiber); a fluorocarbon; a metal powder (such as an aluminium powder and/or a nickel powder); a conductive whisker (such as zinc oxide and/or potassium titanate); a conductive metal oxide (such as titanium oxide); and other conductive materials (such as polyphenylene derivatives). The conducting agent may be, for example, carbon black, for example, carbon black having an average particle diameter of several tens of nanometers.

An amount of the conducting agent may be in a range of about 0.01 parts to about 10 parts by weight, about 0.01 parts to about 5 parts by weight, or about 0.1 parts to about 2 parts by weight, based on 100 parts by weight of the anode active material layer.

The composition for an anode active material layer may further include a thickening agent. As the thickening agent, at least one of carboxymethyl cellulose (CMC), carboxyethyl cellulose, starches, regenerated cellulose, ethyl cellulose, hydroxylmethyl cellulose, hydroxylethyl cellulose, hydroxypropyl cellulose, and polyvinyl alcohol may be utilized. For example, the thickening agent may be CMC.

An amount of the solvent may be in a range of about 100 parts to about 300 parts by weight based on 100 parts by weight of the total weight of the anode active material. When the amount of the solvent is within this range, a process for forming the anode active material layer may be easily carried out.

A thickness of the anode current collector may generally be in a range of about 3 $\mu$m to about 500 $\mu$m. A material of the anode current collector is not particularly limited as long as it has electrical conductivity without causing a chemical change in the corresponding battery. Examples of the material of the anode current collector may be or include copper, stainless steel, aluminium, nickel, titanium, calcined carbon, copper and/or stainless steel that is surface treated with carbon, nickel, titanium, and/or silver, and/or an aluminium-cadmium alloy. Similar to the cathode current collector, the anode current collector may have fine irregularities on a surface thereof to enhance adhesive strength to the anode active material. The anode current collector may be in one or more suitable forms (such as a film, a sheet, a foil, a net, a porous structure, a foam structure, and/or a non-woven structure).

A separator may be interposed between the cathode and the anode prepared as described above.

The separator may generally have a pore diameter in a range of about 0.01 $\mu$m to about 10 $\mu$m and a thickness in a range of about 5 $\mu$m to about 30 $\mu$m. In particular, examples of the separator may be an olefin-based polymer (such as polypropylene and/or polyethylene); or a sheet or non-woven fabric of glass fibers. When a solid electrolyte (such as a polymer) is utilized as an electrolyte, the solid electrolyte may concurrently (e.g., simultaneously) serve as the separator.

The non-aqueous electrolyte including a lithium salt is formed of a non-aqueous electrolyte solvent and a lithium salt. As the non-aqueous electrolyte, a non-aqueous electrolyte solvent, an organic solid electrolyte, and an inorganic solid electrolyte may be utilized.

Examples of the non-aqueous electrolyte solvent may include, but are not limited to, any aprotic organic solvent (such as N-methyl-2-pyrrolidinone, propylene carbonate, ethylene carbonate, butylene carbonate, dimethyl carbonate, diethyl carbonate, gamma-butyro lactone, 1,2-dimethoxy ethane, 2-methyl tetrahydrofuran, dimethylsulfoxide, 1,3-dioxolane, N,N-formamide, N,N-dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and/or ethyl propionate).

Examples of the organic solid electrolyte may include, but are not limited to, polyethylene derivatives, polyethylene oxide derivatives, polypropylene oxide derivatives, phosphoric acid ester polymer, polyester sulfide, polyvinyl alcohol, and/or polyvinylidene fluoride.

Examples of the inorganic solid electrolyte may include, but are not limited to, a nitride, a halide, or a sulfate of Li (such as $Li_3N$, LiI, $Li_5NI_2$, $Li_3N$-LiI-LiOH, $LiSiO_4$, $Li_2SiS_3$, $Li_4SiO_4$, $Li_4SiO_4$-LiI-LiOH, and $Li_3PO_4$-$Li_2S$-$SiS_2$).

The lithium salt may be a material easily dissolved in the non-aqueous electrolyte, for example, but is not limited to, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, $(FSO_2)_2NLi$, lithium chloroborate, lithium lower aliphatic carboxylate, and/or lithium tetraphenyl borate imide.

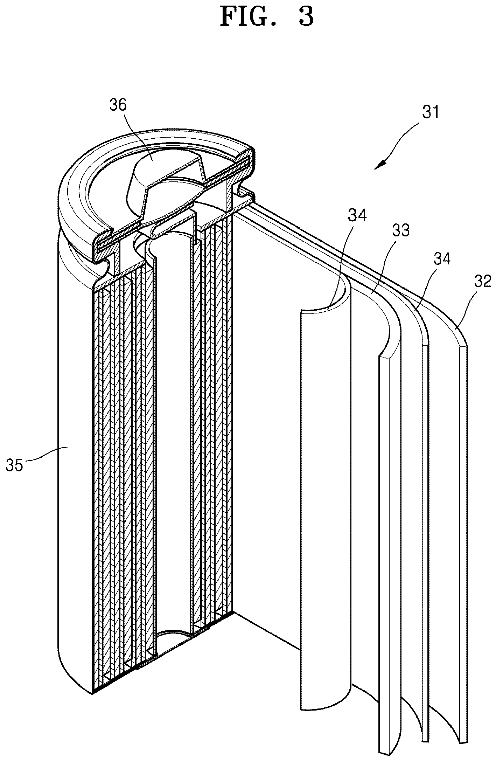

FIG. 3 is a cross-sectional view schematically illustrating a representative structure of a lithium secondary battery according to an embodiment.

Referring to FIG. 3, a lithium secondary battery 31 includes a cathode 33, an anode 32, and a separator 34. The cathode 33, the anode 32, and the separator 34 are wound or folded, and then accommodated in a battery case 35. The separator 34 may be interposed between the cathode 33 and the anode 32 to form a battery assembly in which the cathode 33, the anode 32, and the separator 34 are alternately stacked according to the shape of the battery 31. Subsequently, an organic electrolyte solution is injected into the battery case 35, and the battery case 35 is sealed with a cap assembly 36, thereby completing the manufacture of the lithium secondary battery 31. The battery case 35 may have a cylindrical, rectangular, or thin-film shape. For example, the lithium secondary battery 31 may be a large-sized thin-film battery. The lithium secondary battery 31 may be a lithium ion battery. Once the battery assembly is accommodated in a pouch, impregnated in an organic electrolyte solution, and sealed, the manufacture of a lithium ion polymer battery may be completed. Also, a plurality of the battery assemblies may be stacked to form a battery pack, which may be utilized in any device that requires high capacity and/or high output. For example, the battery pack may be utilized in laptop computers, smart phones, and/or electric vehicles.

The lithium secondary battery may be utilized in electric vehicles (EVs) due to excellent or suitable storage stability at high temperature, lifespan characteristics, and/or high-rate characteristics. For example, the lithium secondary battery may be utilized in hybrid vehicles such as plug-in hybrid electric vehicles (PHEVs).

Hereinafter, one or more embodiments will be described in more detail with reference to the following examples. However, these examples are not intended to limit the scope of the one or more embodiments.

**Preparation of nickel-based active material precursor, nickel-based metal oxide, and nickel-based active material obtained therefrom**

**Preparation Example 1**

A nickel-based active material precursor ($Ni_{0.75}Co_{0.1}Mn_{0.15}(OH)_2$) was synthesized by co-precipitation.

Nickel sulfate ($NiSO_4 \cdot 6H_2O$), cobalt sulfate ($CoSO_4 \cdot 7H_2O$), and manganese sulfate ($MnSO_4H_2O$) in a molar ratio of Ni:Co:Mn=7.5:1:1.5 were dissolved in distilled water as a solvent to prepare a mixture solution. To form a complex compound, a diluted aqueous ammonia ($NH_4OH$) solution and sodium hydroxide (NaOH) as a pH adjuster were prepared. Then, a metal raw material mixture solution, aqueous ammonia, and sodium hydroxide were each added into a reactor. Sodium hydroxide was added to maintain a pH in the reactor. Next, after allowing a reaction to take place for about 20 hours while stirring, addition of the raw material solutions was stopped to obtain a slurry solution.

The slurry solution in the reactor was filtered, washed with distilled water of high purity, and dried in a hot-air oven at 200 °C for 24 hours to obtain a nickel-based active material precursor ($Ni_{0.75}Co_{0.1}Mn_{0.15}(OH)_2$). The nickel-based active material precursor was secondary particles, and an average particle diameter of the secondary particles was about 15 $\mu$m.

A composite metal hydroxide ($Ni_{0.75}Co_{0.1}Mn_{0.15}(OH)_2$) and lithium carbonate were added to prepare a first mixture. In the first mixture, a mixing molar ratio (Li/Me) of lithium to metal was about 0.2. Here, an amount of metal (Me) was the total amount of Ni, Co, and Mn. The first mixture was first heat-treated in the air atmosphere, at a temperature of about 1000 °C for about 14 hours and then the resultant was pulverized to obtain a nickel-based lithium metal oxide having an average particle diameter of about 4 $\mu$m.

Lithium carbonate was added to the nickel-based lithium metal oxide to obtain a second mixture. In the second mixture, a mixing molar ratio (Li/Me) of lithium to metal was about 1.05. Here, an amount of metal (Me) was the total amount of Ni, Co, and Mn. The second mixture was second heat-treated in the air atmosphere at a temperature of about 900 °C to obtain a nickel-based active material ($LiNi_{0.75}Co_{0.1}Mn_{0.15}O_2$) for a lithium secondary battery. The nickel-based active material ($LiNi_{0.75}Co_{0.1}Mn_{0.15}O_2$) was single crystal particles having an average particle diameter of about 4 $\mu$m.

**Preparation of composite cathode active material**

**Example 1**

The nickel-based active material ($LiNi_{0.75}Co_{0.1}Mn_{0.15}O_2$) including single crystal particles having an average particle diameter of about 4 $\mu$m, and cerium oxide ($CeO_2$) were mixed to prepare a mixture, and the mixture was mechanically milled in a ball mill. Here, an amount of the cerium oxide was about 0.002 parts by weight based on 100 parts by weight of the nickel-based active material ($LiNi_{0.75}Co_{0.1}Mn_{0.15}O_2$).

Subsequently, a product of the milling was heat-treated in an oxygen ($O_2$) atmosphere at a temperature of about 850 °C to obtain a composite cathode active material, which was single crystal particles. The composite cathode active material was single crystal particles and had a structure including a coating layer (having a thickness of about 100 nm) including $LiCeO_2$, which was a lanthanide composite. In the composite cathode active material, an amount of $LiCeO_2$, which was a lanthanide composite, was about 0.002 parts by weight based on 100 parts by weight of the composite cathode active material. An average particle diameter of the composite cathode active material, which was single crystal particles, was about 4 $\mu$m.

**Example 2**

A composite cathode active material, which was single crystal particles having an average particle diameter of about 4 $\mu$m, was obtained in substantially the same manner as in Example 1, except that an amount of the cerium oxide was changed to about 0.001 parts by weight.

**Example 3**

A composite cathode active material, which was single crystal particles having an average particle diameter of about 6 $\mu$m, was obtained in substantially the same manner as in Example 1, except that an amount of the cerium oxide was changed to about 0.005 parts by weight.

**Example 4**

A composite cathode active material including single crystal particles having an average particle diameter of

about 3 $\mu$m was obtained in substantially the same manner as in Example 1, except that an average particle diameter of the composite cathode active material was changed to about 3 $\mu$m by utilizing a nickel-based active material (LiNi$_{0.75}$Co$_{0.1}$Mn$_{0.15}$O$_2$), which was single crystal particles having an average particle diameter of about 3 $\mu$m, instead of the nickel-based active material (LiNi$_{0.75}$Co$_{0.1}$Mn$_{0.15}$O$_2$), which was single crystal particles having an average particle diameter of about 4 $\mu$m, obtained in Preparation Example 1.

The nickel-based active material (LiNi$_{0.75}$Co$_{0.1}$Mn$_{0.15}$O$_2$), which was single crystal particles having an average particle diameter of about 3 $\mu$m, was prepared by changing a temperature of first heat-treatment in Preparation Example 1 from about 1000 °C to about 830 °C.

**Example 5**

A composite cathode active material was obtained in substantially the same manner as in Example 1, except that a precursor particle diameter was changed such that an average particle diameter of the composite cathode active material including single crystal particles was about 8 $\mu$m, by utilizing a nickel-based active material (LiNi$_{0.75}$Co$_{0.1}$Mn$_{0.15}$O$_2$) including single crystal particles having an average particle diameter of about 8 $\mu$m, instead of the nickel-based active material (LiNi$_{0.75}$Co$_{0.1}$Mn$_{0.15}$O$_2$) including single crystal particles having an average particle diameter of about 4 $\mu$m (as obtained in Preparation Example 1), and a temperature of the heat-treatment was changed from about 850 °C to about 900 °C.

The nickel-based active material (LiNi$_{0.75}$Co$_{0.1}$Mn$_{0.15}$O$_2$) including single crystal particles having an average particle diameter of about 8 $\mu$m, was prepared by changing an average particle diameter of the secondary particles of the nickel-based active material precursor in Preparation Example 1 from about 15 $\mu$m to about 8 $\mu$m. In this case, the pulverization process was not carried out after the first heat-treatment.

**Comparative Example 1**

A composite cathode active material was obtained in substantially the same manner as in Example 1, except that a precursor particle diameter was changed such that an average particle diameter of the composite cathode active material including single crystal particles was about 15 $\mu$m, by utilizing a nickel-based active material (LiNi$_{0.75}$Co$_{0.1}$Mn$_{0.15}$O$_2$) including single crystal particles having an average particle diameter of about 15 $\mu$m, instead of the nickel-based active material (LiNi$_{0.75}$Co$_{0.1}$Mn$_{0.15}$O$_2$) including single crystal particles having an average particle diameter of about 4 $\mu$m, obtained in Preparation Example 1, and that a temperature of the heat-treatment was changed from about 850 °C to about 1000 °C.

The nickel-based active material (LiNi$_{0.75}$Co$_{0.1}$Mn$_{0.15}$O$_2$) including single crystal particles having an average particle diameter of about 15 $\mu$m, was prepared by changing an average particle diameter of secondary particles of the nickel-based active material precursor in Preparation Example 1 from about 15 $\mu$m to about 13 $\mu$m.

**Comparative Example 2**

A composite cathode active material (having an average particle diameter of about 6 $\mu$m) was obtained in substantially the same manner as in Example 1, except that an amount of the cerium oxide was changed to about 0.01 parts by weight based on 100 parts by weight of the nickel-based active material (LiNi$_{0.75}$Co$_{0.1}$Mn$_{0.15}$O$_2$). The composite cathode active material has an average particle diameter of about 6 $\mu$m.

**Comparative Example 3**

A nickel-based active material including polycrystalline particles having an average particle diameter of about 4 $\mu$m was prepared in substantially the same manner as in Preparation Example 1, except that temperatures of the first heat-treatment and the second heat-treatment in Preparation Example 1 were all changed to about 600 °C, and that an average particle diameter of secondary particles of the nickel-based active material precursor was changed from about 15 $\mu$m to about 4 $\mu$m.

**Comparative Example 4: Cerium-doped composite cathode active material**

A cerium-doped composite cathode active material was prepared in substantially the same manner as in Example 1, except that a temperature of the heat-treatment was changed from about 850 °C to about 1000 °C.

**Manufacture Example 1: Preparation of coin cell**

A coin cell was prepared as follows, utilizing the composite cathode active material prepared in Example 1 as a cathode active material.

Air bubbles were removed from a mixture of 96 g of the nickel-based active material ($LiNi_{0.75}Co_{0.1}Mn_{0.15}O_2$) prepared in Example 1, 2 g of polyvinylidene fluoride, 47 g of N-methylpyrrolidone as a solvent, and 2 g of carbon black as a conducting agent utilizing a mixer to prepare a slurry for forming a cathode active material layer, in which the mixture was uniformly dispersed.

The slurry thus prepared was coated on an aluminium foil as a thin plate by utilizing a doctor blade, and then this was dried at 135 °C or 3 hours or more, followed by roll-pressing and vacuum-drying to prepare a cathode.

The cathode and a lithium metal electrode as a counter electrode were utilized to prepare a 2032 type or kind coin cell. A separator (having a thickness of about 6 $\mu$m) formed of a porous polyethylene (PE) film was interposed between the cathode and the lithium metal counter electrode, and then an electrolyte solution was injected thereto to prepare a 2032 type or kind coin cell. A solution including 1.1 M $LiPF_6$ dissolved in a solvent prepared by mixing ethylene carbonate (EC) and ethyl methyl carbonate (EMC) at a volume ratio of 3:5 was utilized as the electrolyte solution.

**Manufacture Examples 2 to 5: Preparation of coin cell**

Coin cells were each prepared in substantially the same manner as in Manufacture Example 1, except that the composite cathode active materials of Examples 2 to 5 were utilized, respectively, instead of the composite cathode active material of Example 1.

**Comparative Manufacture Examples 1 to 4: Preparation of coin cell**

Lithium secondary batteries were prepared in substantially the same manner as in Manufacture Example 1, except that the active materials prepared in Comparative Examples 1 to 4 were utilized, respectively, instead of the composite cathode active material prepared in Example 1.

**Evaluation Example 1: Scanning electron microscopy (SEM)**

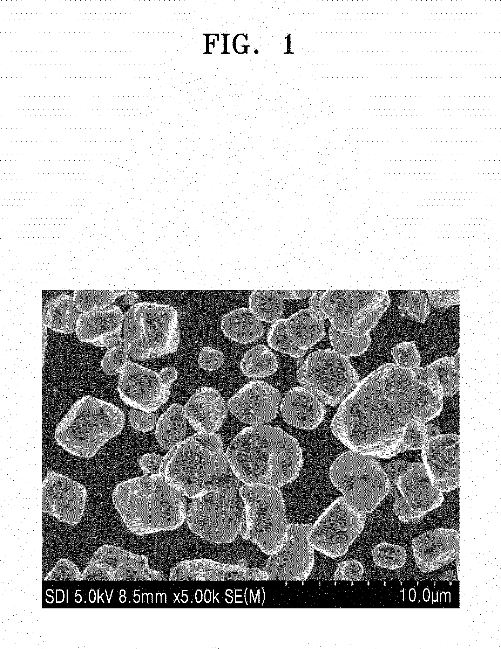

The nickel-based active material prepared in Preparation Example 1, the composite cathode active material prepared in Example 1, and the nickel-based active material prepared in Comparative Example 3 were analyzed utilizing scanning electron microscopy (SEM) (Magellan 400L, available from FEI company). The results of the SEM analysis of the nickel-based active material prepared in Preparation Example 1, the composite cathode active material prepared in Example 1, and the nickel-based active material prepared in Comparative Example 3 are shown in FIGS. 1, 4, and 5, respectively.

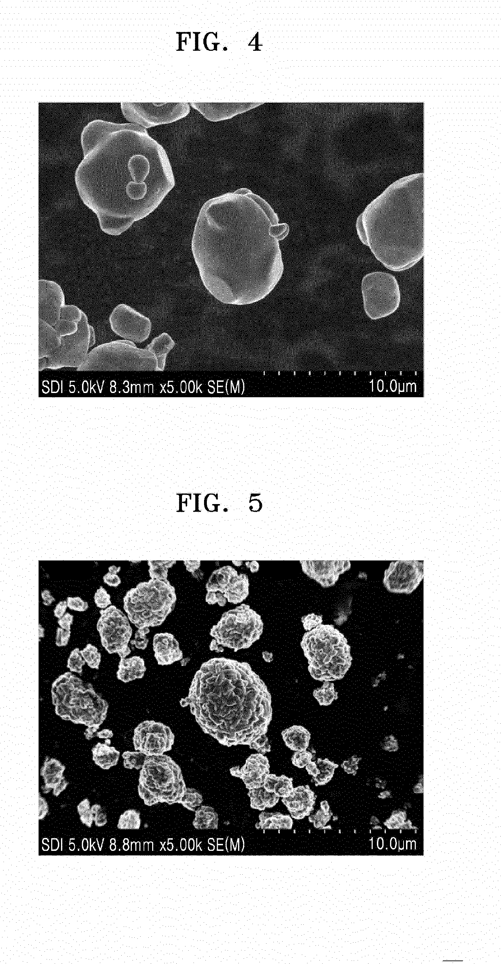

As shown in FIG. 1, the nickel-based active material of Preparation Example 1 included (e.g., had the form of) single crystal particles having an average particle diameter of about 4 $\mu$m. Referring to FIG. 4, the composite cathode active material of Example 1 included (e.g., had the form of) single crystal particles.

In contrast, the nickel-based active material of Comparative Example 3 included (e.g., had the form of) polycrystalline particles, as shown in FIG. 5.

**Evaluation Example 2: X-ray diffraction analysis**

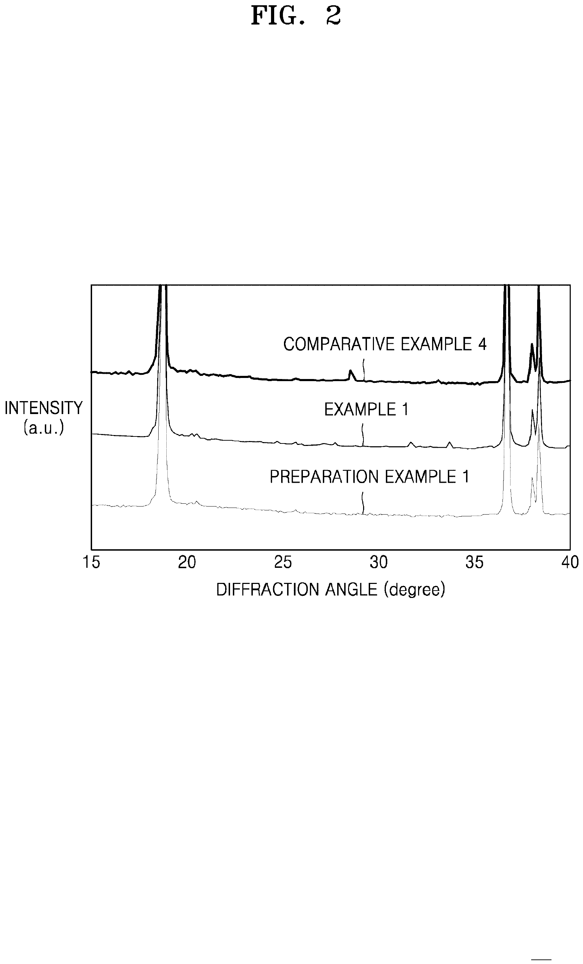

X-ray diffraction analysis was performed on the composite cathode active material prepared in Example 1 by utilizing an X'pert pro (PANalytical) with Cu K$\alpha$ radiation (1.54056 Å). The results of the X-ray diffraction analysis are shown in FIG. 2. FIG. 2 shows the X-ray diffraction analysis of the composite cathode active material of Example 1, the cerium-doped composite cathode active material of Comparative Example 4, and the nickel-based active material of Preparation Example 1 (not including cerium).

Referring to FIG. 2, the composite cathode active material of Example 1 had peaks related to a composite including cerium in regions where a diffraction angle 2θ was in a range of about 30.50° to about 32.50° and in a range of about 32.51° to about 34.50°. From this, it was determined that the composite cathode active material of Example 1 had a coating layer including a composite including cerium, not a structure doped with cerium. Because the composite cathode active material of Comparative Example 4 has a structure doped with cerium, a peak related to a composite including lithium and cerium appears in a region where a diffraction angle 2θ is in a range of about 23.50° to about 25.50°.

**Evaluation Example 3: Charge/discharge efficiency**

Charge/discharge characteristics of the coin cells prepared in Manufacture Examples 1 to 5 and Comparative Manufacture Examples 1 to 3 were evaluated utilizing a charging/discharging device (TOYO-3100 available from TOYO).

A first charging/discharging was performed by charging each of the cells with a constant current at a 0.2C rate until a voltage reached 4.25 V, and then charging with a constant voltage until a current reached 0.05C. When the charging was completed, the cell was rested for 10 minutes and then discharged with a constant current at a 0.2C rate until a voltage reached 3 V.

Lifespan evaluation was performed by charging each of the cells with a constant current at a 1C rate until a voltage reached 4.3 V in a chamber, in which the temperature was maintained at 45 °C, and then charging the cell with a constant voltage until a current reached 0.05C. When the charging was completed, the cell was rested for 10 minutes and then discharged with a constant current at a 1C rate until a voltage reached 3 V. The cell underwent 50 cycles of the charging/discharging.

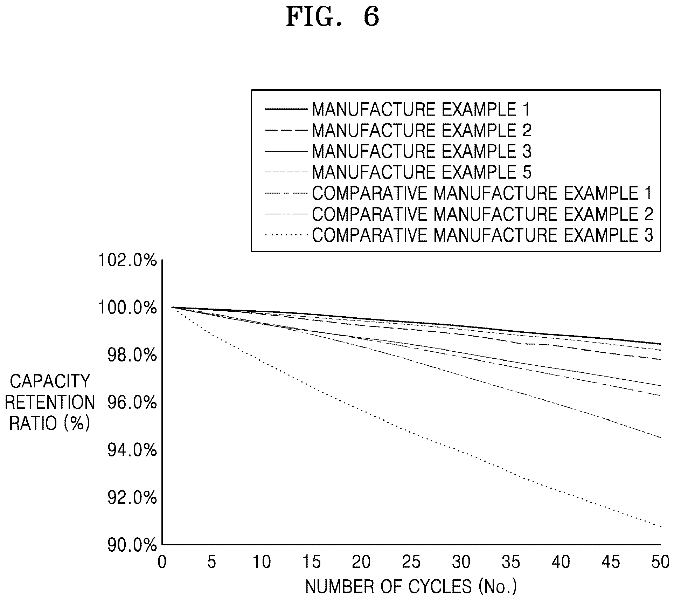

Capacity retention ratio (CRR) was calculated by Equation 1, charge/discharge efficiency was calculated by Equation 2, and capacity retention ratio, charge/discharge efficiency characteristics, and battery capacity were examined and some of these are shown in Table 1 and FIG. 6.

### Equation 1

$$\text{Capacity retention ratio [\%]} = [\text{discharge capacity of } 50^{th} \text{ cycle/discharge capacity of } 1^{st} \text{ cycle}] \times 100$$

### Equation 2

$$\text{Charge/discharge efficiency} = [\text{average discharge voltage of } 1^{st} \text{ cycle/average charge voltage of } 1^{st} \text{ cycle}] \times 100$$

Table 1

| Sample | Charge capacity (mAh/g) | Discharge capacity (mAh/g) | Charge/discharg e efficiency (%) | Capacity retention ratio (%) |
|---|---|---|---|---|
| Manufacture Example 1 | 196.2 | 171.3 | 87.3 | 98.4 |
| Manufacture Example 2 | 195.9 | 171.2 | 87.4 | 97.8 |
| Manufacture Example 3 | 191.8 | 165.0 | 86.0 | 96.7 |
| Manufacture Example 4 | 195.1 | 169.2 | 86.8 | 97.8 |
| Manufacture Example 5 | 197.2 | 166.2 | 84.3 | 98.2 |
| Comparative Manufacture Example 1 | 193.2 | 162.6 | 84.2 | 96.2 |
| Comparative Manufacture Example 2 | 196.9 | 163.8 | 83.2 | 94.5 |
| Comparative Manufacture Example 3 | 216.0 | 189.4 | 87.7 | 90.7 |

Referring to Table 1 and FIG. 6, the coin cells prepared in Manufacture Examples 1 to 5 had improved charge/discharge efficiency and capacity retention ratio (lifespan) characteristics compared with the coin cells prepared in Comparative Manufacture Examples 1 and 2, and the coin cells prepared in Manufacture Examples 1 to 5 had significantly improved capacity retention ratio (lifespan) characteristics than the coin cell of Comparative Manufacture Example 3.

The coin cell of Comparative Manufacture Example 3 had excellent or suitable charge/discharge efficiency as shown in Table 1, but had deteriorated lifespan characteristics.

**Evaluation Example 4: Inductively coupled plasma (ICP) analysis**

Inductively coupled plasma (ICP) analysis was performed on the composite cathode active material of Example 1, and the results are shown in Table 2.

**Table 2**

| Sample | Li | Ni | Co | Mn | La | Ce | Li | Ni | Co | Mn | La | Ce |
|---|---|---|---|---|---|---|---|---|---|---|---|---|
| | wt.% | | | | | | Li/Me | mol ratio (%) | | | | |
| Example 1 | 7.4 | 44.6 | 6 | 8 | - | 0.22 | 1.06 | 75.32 | 10.09 | 14.43 | - | 0.16 |

Referring to Table 2, it may be confirmed that the composite cathode active material of Example 1 contained cerium, and the overall composition of the composite cathode active material of Example 1 was confirmed.

When a composite cathode active material according to an embodiment is utilized, aggregation of composite cathode active material particles may be suppressed or reduced, and side reactions with an electrolyte solution may be suppressed or reduced. Therefore, the composite cathode active material including a coating layer may provide improved safety and/or lifespan characteristics compared with a non-coated nickel-based active material.

Terms such as "substantially," "about," and "~" are used as terms of approximation and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6.

It will be understood that the embodiments described herein should be considered in a descriptive sense only and not for purposes of limitation. Descriptions of features or aspects within each embodiment should typically be considered as being available for other similar features or aspects in other embodiments. While one or more embodiments have been described with reference to the drawings, it will be understood by those of ordinary skill in the art that various suitable changes in form and details may be made therein without departing from the scope of the disclosure as defined by the following claims and equivalents thereof.

**Claims**

1.    A composite cathode active material comprising:

a nickel-based active material comprising about 60 mol% or more of nickel; and
a coating layer on a surface of the nickel-based active material, the coating layer comprising a lanthanide composite,
wherein the composite cathode active material comprises single crystal particles having an average particle diameter in a range of about 2 $\mu$m to about 8 $\mu$m, an aggregate of primary particles having an average particle diameter in a range of about 2 $\mu$m to about 8 $\mu$m, or a combination thereof,
and
wherein an amount of the lanthanide composite is about 0.001 parts by weight or more and less than about 0.01 parts by weight, based on 100 parts by weight of the nickel-based active material.

2.    The composite cathode active material of claim 1, wherein a lanthanide in the lanthanide composite is La, Ce, Pr, Nd, Pm, Sm, Eu, Gd, Tb, Dy, Ho, Er, Tm, Yb, Lu, or a combination thereof.

3.    The composite cathode active material of claim 1, wherein the lanthanide composite is:

i) an oxide comprising La, Ce, Pr, Nd, Pm, Sm, Eu, Gd, Tb, Dy, Ho, Er, Tm, Yb, Lu, or a combination thereof, or
ii) an oxide comprising lithium and La, Ce, Pr, Nd, Pm, Sm, Eu, Gd, Tb, Dy, Ho, Er, Tm, Yb, Lu, or a combination thereof.

4. The composite cathode active material of claim 1, wherein the lanthanide composite is a compound represented by Formula 1:

> **Formula 1** $Li_xCe_yO_2$,

and wherein, in Formula 1, $0 \leq x \leq 1.05$ and $0.95 \leq y \leq 1.05$.

5. The composite cathode active material of claim 1, wherein the lanthanide composite is $CeO_2$, $LiCeO_2$, or a combination thereof.

6. The composite cathode active material of any one of claims 1 to 5, wherein the nickel-based active material is a compound represented by Formula 2:

> **Formula 2** $Li_a(Ni_{1-x-y-z}Co_xMn_yM_zO_{2\pm\alpha1}$,

and

> wherein, in Formula 2, M is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), aluminium (Al), and cerium (Ce), and
> $0.9 \leq a \leq 1.1$, $0.6 \leq (1-x-y-z) < 1$, $0 < x < 0.4$, $0 \leq y < 0.4$, $0 \leq z < 0.4$, and $0 \leq \alpha1 \leq 0.1$.

7. The composite cathode active material of any one of claims 1 to 6, wherein:

> (i) the coating layer is in a form of discontinuous islands; and/or
> (ii) the composite cathode active material has X-ray diffraction peaks in a range of about 30.50° to about 32.49° and about 32.50° to about 34.50°.

8. A method of preparing the composite cathode active material of any one of claims 1 to 7, the method comprising:

> mixing a first lithium precursor and a nickel-based active material precursor for a lithium secondary battery to obtain a first mixture, the nickel-based active material precursor comprising about 60 mol% or more of nickel, wherein a mixing molar ratio (Li/Me) of lithium to metal in the first mixture is in a range of about 0.2 to about 0.4;
> performing a first heat-treatment on the first mixture in an oxidizing gas atmosphere to obtain a nickel-based lithium metal oxide;
> obtaining a second mixture comprising the nickel-based lithium metal oxide and a second lithium precursor, wherein a mixing molar ratio (Li/Me) of lithium to metal in the second mixture is in a range of about 0.8 to about 1.2;
> performing a second heat-treatment on the second mixture in an oxidizing gas atmosphere to obtain a lithium-containing nickel-based active material comprising about 60 mol% or more of nickel based on 100 mol% of total metal elements excluding lithium of the nickel-based active material;
> mechanically milling a mixture comprising a lanthanide precursor and the lithium-containing nickel-based active material to obtain a milled product; and
> performing a third heat-treatment on the milled product at a temperature in a range of higher than about 600 °C to lower than about 1000 °C to prepare the composite cathode active material,
> wherein an amount of the lanthanide precursor is about 0.001 parts by weight to less than about 0.01 parts by weight, based on 100 parts by weight of the lithium-containing nickel-based active material.

9. The method of claim 8, wherein:

> (i) the first heat-treatment is performed at a temperature in a range of about 600 °C to about 1200 °C; and/or
> (ii) the second heat-treatment is performed at a temperature in a range of about 700 °C to about 900 °C; and/or
> (iii) the third heat-treatment is performed in an oxidizing gas atmosphere at a temperature in a range of about 650 °C to about 900 °C.

10. The method of claim 8 or claim 9, wherein the nickel-based active material precursor is a compound represented by Formula 5, a compound represented by Formula 6, or a combination thereof:

> **Formula 5** $Ni_{1-x-y-z}Co_xMn_yM_z(OH)_2$,

Formula 6          $Ni_{1-x-y-z}Co_xMn_yM_zO$,

and

wherein, in Formulae 5 and 6, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), aluminium (Al), and cerium (Ce), and $0.6 \leq (1-x-y-z) < 1$, $0 < x < 0.4$, $0 \leq y < 0.4$, and $0 \leq z < 0.4$.

11. A method of preparing the composite cathode active material of any one of claims 1 to 7, the method comprising:

mixing a first lithium precursor and a nickel-based active material precursor for a lithium secondary battery to obtain a first mixture, the nickel-based active material precursor comprising about 60 mol% or more of nickel, wherein a mixing molar ratio (Li/Me) of lithium to metal in the first mixture is in a range of about 0.2 to about 0.4; performing a first heat-treatment on the first mixture in an oxidizing gas atmosphere to obtain a nickel-based lithium metal oxide;
obtaining a second mixture comprising the nickel-based lithium metal oxide, a second lithium precursor, and a lanthanide precursor, wherein a mixing molar ratio (Li/Me) of lithium to metal in the second mixture is in a range of about 0.8 to about 1.2;
performing a second heat-treatment on the second mixture in an oxidizing gas atmosphere; and mechanically milling the heat-treated second mixture to prepare the composite cathode active material, wherein an amount of the lanthanide precursor is about 0.001 parts by weight to less than about 0.01 parts by weight, based on 100 parts by weight of the nickel-based lithium metal oxide.

12. The method of claim 11, wherein:

(i) the first heat-treatment is performed at a temperature in a range of about 600 °C to about 1200 °C; and/or
(ii) the second heat-treatment is performed at a temperature in a range of about 700 °C to about 900 °C.

13. The method of claim 11 or claim 12, wherein the nickel-based active material precursor is a compound represented by Formula 5, a compound represented by Formula 6, or a combination thereof:

Formula 5          $Ni_{1-x-y-z}Co_xMn_yM_z(OH)_2$

,

Formula 6          $Ni_{1-x-y-z}Co_xMn_yM_zO$,

and

wherein, in Formulae 5 and 6, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), aluminum (Al), and cerium (Ce), and $0.6 \leq (1-x-y-z) < 1$, $0 < x < 0.4$, $0 \leq y < 0.4$, and $0 \leq z < 0.4$.

14. A cathode for a lithium secondary battery, the cathode comprising the composite cathode active material of any one of claims 1 to 7.

15. A lithium secondary battery comprising:

a cathode comprising the composite cathode active material of any one of claims 1 to 7;
an anode; and
an electrolyte between the cathode and the anode.

# FIG. 1

SDI 5.0kV 8.5mm x5.00k SE(M)　　　　10.0μm

# FIG. 2

COMPARATIVE EXAMPLE 4

EXAMPLE 1

PREPARATION EXAMPLE 1

INTENSITY
(a.u.)

DIFFRACTION ANGLE (degree)

# FIG. 3

FIG. 4

SDI 5.0kV 8.3mm x5.00k SE(M)          10.0µm

FIG. 5

SDI 5.0kV 8.8mm x5.00k SE(M)          10.0µm

# FIG. 6

Legend:
- MANUFACTURE EXAMPLE 1
- MANUFACTURE EXAMPLE 2
- MANUFACTURE EXAMPLE 3
- MANUFACTURE EXAMPLE 5
- COMPARATIVE MANUFACTURE EXAMPLE 1
- COMPARATIVE MANUFACTURE EXAMPLE 2
- COMPARATIVE MANUFACTURE EXAMPLE 3

CAPACITY RETENTION RATIO (%) vs NUMBER OF CYCLES (No.)

Europäisches
Patentamt

European
Patent Office

Office européen
des brevets

# EUROPEAN SEARCH REPORT

Application Number

EP 22 17 6852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 104 347 853 B (QINHUANGDAO ZHONGKE YUANDA BATTERY MATERIALS CO LTD) 12 April 2017 (2017-04-12) * example 5 * | 1-15 | INV. C01G53/00 H01M4/00 |
| Y | LIU KUN ET AL: "Enhanced cycling stability and rate performance of Li[Ni0.5Co0.2Mn0.3]O2by CeO2coating at high cut-off voltage", JOURNAL OF POWER SOURCES, ELSEVIER, AMSTERDAM, NL, vol. 281, 27 December 2014 (2014-12-27), pages 370-377, XP029142619, ISSN: 0378-7753, DOI: 10.1016/J.JPOWSOUR.2014.12.131 * the whole document * | 1-15 | |
| Y | CN 104 835 955 B (DONGFANG ELECTRIC CORP) 31 May 2017 (2017-05-31) * examples 11,12,14 * | 1-15 | |
| Y | WANG YINZHONG ET AL: "High-Voltage "Single-Crystal" Cathode Materials for Lithium-Ion Batteries", ENERGY & FUELS, vol. 35, no. 3, 14 January 2021 (2021-01-14), pages 1918-1932, XP055975466, WASHINGTON, DC, US. ISSN: 0887-0624, DOI: 10.1021/acs.energyfuels.0c03608 Retrieved from the Internet: URL:http://pubs.acs.org/doi/pdf/10.1021/acs.energyfuels.0c03608> * the whole document * | 1-15 | TECHNICAL FIELDS SEARCHED (IPC) C01G H01M |

The present search report has been drawn up for all claims

| Place of search | Date of completion of the search | Examiner |
|---|---|---|
| Munich | 27 October 2022 | Timmermans, Michel |

EPO FORM 1503 03.82 (P04C01)

## ANNEX TO THE EUROPEAN SEARCH REPORT
## ON EUROPEAN PATENT APPLICATION NO.

EP 22 17 6852

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2022

| Patent document cited in search report | Publication date | Patent family member(s) | Publication date |
|---|---|---|---|
| CN 104347853 B | 12-04-2017 | NONE | |
| CN 104835955 B | 31-05-2017 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102021009565